# DEMANDE DE BREVET EUROPEEN

(11) **EP 2 711 175 A1**
(43) Date de publication de la demande: **26.03.2014**
(21) Numéro de dépôt: 13185494.5
(22) Date de dépôt: 23.09.2013
(51) Int. Cl.: B32B 17/10, B44C 3/02, B44C 5/04, C03C 17/34, C03C 27/12

(54) **Structure verrière comprenant un décor**

(30) Priorité: 24.09.2012 FR 1258939
(71) Demandeur: Saint-Gobain Glass France, 92400 Courbevoie (FR)
(72) Inventeur: Verger, Arnaud, 75013 PARIS (FR); Valentin, Emmanuel, 94420 LE PLESSIS TREVISE (FR)
(74) Mandataire: Aupetit, Muriel J. C.

(57) **Abrégé**

La présente invention concerne une structure verrière comprenant au moins deux substrats verriers (10, 11) et un élément décoratif (50) agencé entre les deux substrats verriers. Les deux faces externes opposées (12, 13) des substrats sont pourvues d'un revêtement antireflet et l'élément décoratif par son matériau constitutif présente un coefficient de réflexion lumineuse supérieur à 30%.

## Description

L'invention concerne une structure verrière comprenant au moins deux substrats verriers entre lesquels est agencé au moins un décor, ce décor étant feuilleté entre les substrats ou assemblé au moins à la face interne de l'un des substrats verriers et formé à partir d'une feuille en matière plastique décoré, d'un voile de non tissé tel qu'en polyéthylène téréphtalate (PET) ou en fibres de verre.

L'invention sera plus particulièrement décrite en regard, sans toutefois y être limitée, à l'utilisation d'une telle structure pour une cloison en verre.

Une telle cloison en verre est destinée à tout type d'utilisation en extérieur et/ou intérieur, dans un bâtiment ou dans un moyen de transport (véhicule automobile, train, avion, bateau...), ou dans un espace public. En particulier elle peut former un moyen de séparation entre pièces, une séparation pour compartiment, une séparation à l'intérieur d'une même pièce, une porte, une vitrine, un comptoir, un dispositif de décoration d'intérieur, un garde-corps, un produit d'ameublement, etc...

L'utilisation d'une telle cloison est notamment de fournir une paroi transparente qui délimite de part et d'autre des zones d'occupation de l'espace.

Il est connu de proposer des cloisons en verre à partir de vitrages incorporant des éléments décoratifs pour leur ajouter une fonction esthétique. Ces éléments se présentent par exemple sous la forme d'un voile de non tissé pourvu de décors et feuilleté entre deux substrats verriers. En variante, les éléments décoratifs peuvent être obtenus par impression sur un substrat verrier, le verre étant nommé verre imprimé.

Cependant, la masse verrière dans de telles cloisons à décors reste imposante et est par conséquent nettement visible, notamment par un observateur situé dans une première pièce et regardant dans la direction du vitrage selon une incidence sensiblement normale. Ceci d'une part affecte la visibilité d'une pièce à l'autre, et d'autre part constitue le plus souvent une altération esthétique de l'ensemble de la cloison, les motifs ne ressortant pas assez de la structure verrière pour que leurs formes et leurs contours soient parfaitement discernables pour l'observateur.

Il est connu du document DE 202008003804 U1 un vitrage feuilleté pourvu d'un élément décoratif, le verre du substrat étant doté d'un antireflet. Ainsi, lorsque le vitrage est placé sous un flux incident de lumière, la présence d'un antireflet permet une vision plus nette de l'élément décoratif. Cependant, le verre reste encore visible. Or, il peut être souhaitable d'améliorer encore la vision du décor tout en diminuant fortement la perception du verre, voire même à ce que le verre semble invisible.

L'invention a donc pour but de proposer une structure verrière dotée d'au moins un élément décoratif, qui ne présente pas les inconvénients précités et procure une perception (quasi) invisible du verre.

Selon l'invention, la structure verrière comporte au moins deux substrats verriers dotés de faces externes en regard de l'environnement extérieur de la structure et de faces opposées internes en regard l'une de l'autre, et au moins un élément décoratif disposé entre les faces internes des deux substrats verriers, les faces externes des substrats étant toutes deux pourvues d'un revêtement antireflet, et est caractérisée en ce que l'élément décoratif par son matériau constitutif présente un coefficient de réflexion lumineuse supérieur à 30%.

Les inventeurs ont mis en évidence qu'outre la fonction antireflet que doit avoir le verre, la nature du motif présente son importance. Ainsi, le motif est sélectionné de sorte à présenter un coefficient de réflexion lumineuse supérieur à 30%. Il s'agit bien ici du coefficient de réflexion de l'élément décoratif en tant que tel sans être associé au verre du vitrage.

Ainsi, la perception de l'élément décoratif est tellement accentuée par rapport à celle du verre, que le verre est comme imperceptible tandis que l'élément décoratif semble flotter dans l'espace.

Notamment par la combinaison de caractéristiques ci-dessus, (choix de l'antireflet pour le verre et sélection du motif avec un coefficient de réflexion lumineuse supérieur à 0,3), la structure présente de préférence une luminance L_{M} en regard d'une zone associée à l'élément décoratif et une luminance L_{V} en regard d'une zone exempte de l'élément décoratif, telles que le rapport des luminances L_{M}/L_{V} étant supérieur à 99 sous un éclairage lumineux d'environ 1000 Lux.

L'éclairage n'est pas direct, c'est-à-dire qu'il ne se reflète pas directement sur la surface vitrée du vitrage, ou que pour un observateur se plaçant dos à la structure verrière, celui-ci ne reçoit pas un éclairage direct en pleine face.

Les luminances (en candelas/m²) sont mesurées à l'aide d'un luminancemètre, par exemple celui de dénomination LS 100 fabriqué par la société Minolta.

L_{M} correspond à la luminance mesurée dans une zone en regard d'une face externe du vitrage pourvue de l'antireflet et face à l'élément décoratif. L_{V} correspond à la luminance mesurée en regard de la même face externe dotée de l'antireflet, toutefois en regard d'une zone qui est exempte d'élément décoratif, c'est-à-dire qui n'a pas d'élément décoratif associé, zone totalement transparente d'un côté à l'autre. Les mesures des deux luminances L_{M} et L_{V} se font du même côté du vitrage.

Au cas où il serait difficile de trouver pour la mesure de luminance L_{V} du vitrage, une zone du vitrage de surface suffisante exempte d'élément décoratif, car l'élément décoratif couvrant par exemple la quasi-totalité de la surface verrière, cette mesure pourrait être faite dans les mêmes conditions (lieu et éclairage) en utilisant un vitrage dépourvu d'élément décoratif mais de verre identique et présentant le même antireflet.

Ainsi, la structure verrière de l'invention permet, tout en jouant son rôle de structure séparatrice du type cloison, de limiter toute gêne de la vision d'un côté de la structure en direction de l'autre côté, tout en mettant en exergue les décors qui semblent en quelque sorte flotter dans l'espace sans présence de matière autour d'eux, la masse verrière étant pratiquement indécelable. Il faut bien souligner ici que, s'il est usuel de rapporter des couches antireflets sur les vitrages automobiles ou vitrage extérieurs de bâtiments, ce n'est pas le cas pour les vitrages intérieurs.

Or le déposant a mis en évidence qu'utiliser un revêtement constitué de couches antireflets pour les cloisons intérieures de bâtiment pourvus d'éléments décoratifs feuilletés entre les deux substrats verriers de la cloison pouvait procurer un effet de transparence de la cloison en ne conservant dans l'espace que la vision de l'élément décoratif. Les inventeurs ont également trouvé que cet effet n'est obtenu que sous certaines conditions, issues de combinaisons particulières des propriétés du matériau constituant le motif et des propriétés spécifiques de la surface verrière.

Selon une caractéristique, le revêtement antireflet est un empilement de couches minces.

Avantageusement, le substrat verrier pourvu du revêtement antireflet présente un coefficient de réflexion inférieur ou égal à 2 %, voire inférieur à 1%, de préférence de l'ordre de 0,5%.

Tout coefficient de réflexion lumineuse est mesuré de manière connue par spectroscopie et tel que défini selon la norme européenne EN 410.

L'élément décoratif est de préférence formé à partir d'une feuille en matière plastique décoré, tel qu'un voile de non tissé du type en polyéthylène téréphtalate (PET) ou en fibres de verre. L'élément décoratif est de préférence rendu solidaire d'une feuille en matière plastique du type PVB (polyvinylbutyral) feuilletée entre les deux substrats verriers.

Le revêtement antireflet est avantageusement un empilement de couches minces comportant une première couche, à haut indice, d'indice de réfraction n1 compris entre 1,8 et 2,2 et d'une épaisseur géométrique e1 comprise entre 5 et 50 nm, une seconde couche à bas indice, d'indice de réfraction n2 compris entre 1,35 et 1,65 et d'épaisseur géométrique e2 comprise entre 5 et 50 nm, une troisième couche à haut indice, d'indice de réfraction n3 compris entre 1,8 et 2,2 et d'épaisseur géométrique e3 comprise entre 70 et 120 nm, et une quatrième couche à bas indice, d'indice de réfraction n4 compris entre 1,35 et 1,65 et d'épaisseur géométrique e4 d'au moins 80 nm.

L'empilement de couches minces est de préférence à base d'oxyde(s) métallique(s) choisi(s) parmi l'oxyde de zinc, l'oxyde d'étain, un oxyde mixte de zinc et d'étain, l'oxyde de zirconium ou à base de nitrure(s) choisi(s) parmi le nitrure de silicium et/ou le nitrure d'aluminium, un oxyde mixte de titane et zirconium.

Sans sortir du cadre de l'invention, d'autres types de couches antireflets connues de l'art peuvent également être envisagées, en particulier des couches de silice poreuse déposées par exemple par les techniques sol-gel.

La structure verrière est selon l'invention intégrée à une cloison intérieure de bâtiment ou de moyens de transport. La cloison pourrait être formée d'une pluralité de vitrages ci-dessus aboutés les uns aux autres.

La présente invention est maintenant décrite à l'aide des modes de réalisations qui suivent, uniquement illustratifs et nullement limitatifs de la portée de l'invention, et à partir des figures ci-jointes, dans lesquelles :
- La figure 1 représente une vue schématique partielle en coupe d'un module verrier selon l'invention;
- La figure 2 illustre une vue schématique de face du module de la figure 1.

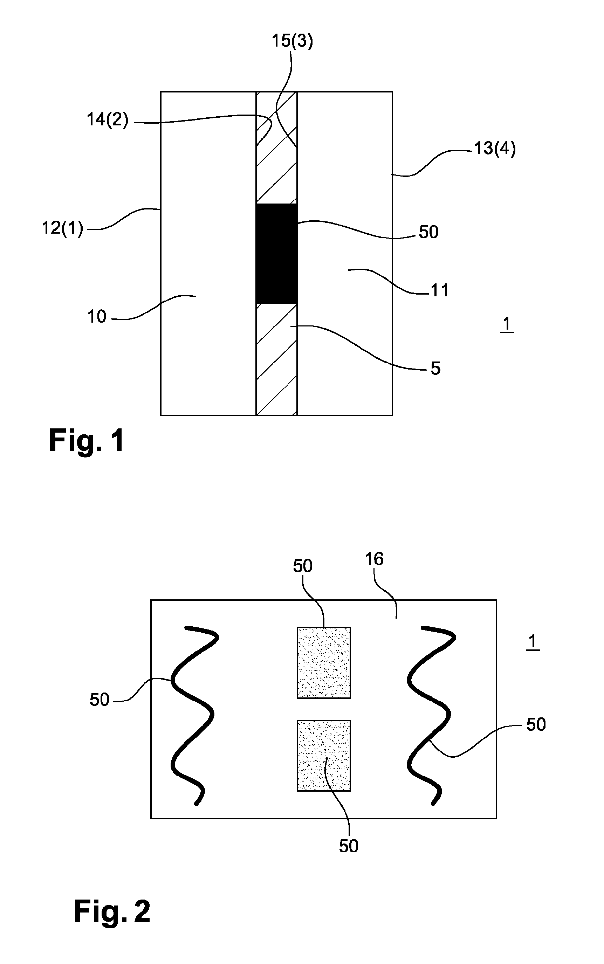

La structure verrière de l'invention est formée à partir d'un vitrage 1 illustré sur la figure 1 qui comporte au moins un premier substrat 10, un second substrat 11, et un intercalaire 5, par exemple en polyvinyle butyrale (PVB) feuilleté entre les deux substrats. L'intercalaire 5 incorpore un élément décoratif, comprenant par exemple plusieurs motifs 50, tel que visible sur la figure 2.

Les premier et second substrats 10 et 11 comprennent respectivement des faces externes 12 et 13 en regard de l'environnement extérieur du vitrage, et des faces internes (respectivement 14 et 15) tournées vers l'intérieur du vitrage et liées par l'intercalaire 5. Les faces externes 12 et 13 constituent usuellement les faces dites 1 et 4 du vitrage feuilleté, et les faces internes 14 et 15, les faces 2 et 3.

L'élément décoratif est par exemple formé d'un non-tissé à base de matière plastique. Ce décor peut présenter toutes formes géométriques, à lignes continues ou non.

Selon l'invention, chaque substrat verrier 10, respectivement 11, comprend un revêtement antireflet sélectionné selon l'invention. Le revêtement antireflet est déposé sur les faces 1 et 4 du vitrage.

Avantageusement, le revêtement antireflet recouvre au moins la surface du vitrage disposée en regard de l'élément décoratif. De préférence, le revêtement recouvre la totalité de la face verrière sur laquelle il est déposé.

Selon l'invention, afin qu'un observateur discerne nettement et de manière optimale le motif à travers le vitrage sans en percevoir la masse verrière, créant ainsi un effet de lévitation, les propriétés de la surface verrière sont adaptées aux propriétés intrinsèques du matériau constituant l'élément décoratif.

Plus précisément, le matériau constitutif et le revêtement antireflet disposé sur la face externe des substrats verriers sont choisis l'un en fonction de l'autre de telle façon que le rapport des luminances L_{M}/L_{V} entre la surface verrière en regard de l'élément décoratif et la surface verrière du vitrage qui ne présente pas d'élément décoratif en regard, soit supérieur à 99, notamment sous un éclairage lumineux d'environ 1000 Lux.

L_{M} correspond à la luminance mesurée en regard d'une face externe du vitrage pourvue de l'antireflet et au droit de l'élément décoratif. L_{V} correspond à la luminance mesurée en regard de la même face externe dotée de l'antireflet, toutefois au droit d'une zone exempte d'élément décoratif. Les mesures des deux luminances L_{M} et L_{V} se font du même côté du vitrage.

En particulier, la valeur d'éclairage de 1000 lux est choisie selon l'invention car représentative d'une ambiance lumineuse intérieure classique à l'intérieur d'un bâtiment, résultant notamment d'un éclairage interne artificiel, notamment d'un dispositif d'éclairage fixé au plafond type néon ou lampe. Les luminances (en candelas/m²) sous un tel éclairement sont directement mesurées sur le vitrage à l'aide du même luminancemètre, par exemple celui commercialisé sous la dénomination LS 100 fabriqué par la société Minolta.

Par une telle structure verrière, seul le motif est perçu par l'observateur, le verre s'effaçant.

Afin de parvenir à un tel ajustement du rapport des luminances, il est en particulier nécessaire de choisir un revêtement antireflet adapté à la nature de l'élément décoratif choisi et aux propriétés intrinsèques de ce dernier, à titre d'exemple non limitatif en tenant compte du coefficient de réflexion lumineuse du matériau qui constitue l'élément décoratif. L'importance de tels choix est notamment illustrée par les exemples qui suivent.

Au sens de la présente invention les coefficients de réflexion lumineuse sont mesurés de manière connue par spectroscopie et définis selon la norme européenne EN 410.

L'intercalaire 5 portant l'élément décoratif peut être selon un mode de réalisation de l'invention à base de matière plastique transparente sur laquelle est imprimé le motif. La matière sélectionnée est de préférence une matière plastique transparente dont l'indice de réfraction est proche du verre, telle que du polyvinyle de butyral (PVB) d'indice 1,48.

On choisira typiquement selon l'invention un motif pour l'élément décoratif dont le matériau constitutif présente un coefficient de réflexion supérieur à 30%.

Selon un mode général de réalisation de l'invention, on choisira de préférence un substrat verrier pourvu d'un revêtement antireflet de tel manière que son coefficient de réflexion soit inférieur ou égal à 2 %, voire inférieur à 1%, de préférence de l'ordre de 0,5%.

De manière préférée, le revêtement antireflet est constitué d'un empilement de couches minces.

Il est connu cependant d'obtenir de la technique des substrats à propriétés antireflets obtenues par d'autres moyens que le dépôt de couches minces, par exemple par la présence d'un flou à la surface du verre. Ce flou est obtenu par dépolissage de la surface verrière, la surface du verre présentant des structures rugueuses pouvant atteindre une hauteur de 10 nm. Toutefois, les inventeurs ont mis en évidence qu'un tel substrat à propriétés antireflets présentant une surface verrière floue ne convient pas à l'invention.

Aussi est-elle retenue selon l'invention la sélection d'un substrat doté de couches minces à fonction antireflets.

Un revêtement antireflet de couches minces est par exemple celui décrit dans la demande de brevet internationale WO 01/37006 incorporée par référence dans la présente demande.

En particulier le revêtement antireflet est fait d'un empilement de couches minces comportant une première couche, à haut indice, d'indice de réfraction n1 compris entre 1,8 et 2,2 et d'une épaisseur géométrique e1 comprise entre 5 et 50 nm, une seconde couche à bas indice, d'indice de réfraction n2 compris entre 1,35 et 1,65 et d'épaisseur géométrique e2 comprise entre 5 et 50 nm, une troisième couche à haut indice, d'indice de réfraction n3 compris entre 1,8 et 2,2 et d'épaisseur géométrique e3 comprise entre 70 et 120 nm, et une quatrième couche à bas indice, d'indice de réfraction n4 compris entre 1,35 et 1,65 et d'épaisseur géométrique e4 d'au moins 80 nm.

La première couche à haut indice et la seconde couche à bas indice peuvent être remplacées par une couche unique d'indice intermédiaire n5 compris entre 1, 65 et 1, 80, et ayant de préférence une épaisseur optique e5 comprise entre 50 et 140 nm, de préférence entre 85 et 120 nm.

Cette couche d'indice intermédiaire est de préférence à base d'un mélange entre d'une part de l'oxyde de silicium et d'autre part au moins un oxyde métallique choisi parmi l'oxyde d'étain, l'oxyde de zinc, l'oxyde de titane, ou est à base d'un oxynitrure ou oxycarbure de silicium et/ou d'oxynitrure d'aluminium.

La première couche à haut indice et/ou la troisième couche à haut indice sont de préférence à base d'oxyde (s) métallique (s) choisi (s) parmi l'oxyde de zinc, l'oxyde d'étain, un oxyde mixte de zinc et d'étain, l'oxyde de zirconium ou à base de nitrure (s) choisi (s) parmi le nitrure de silicium et/ou le nitrure d'aluminium, un oxyde mixte de titane et zirconium.

La seconde couche à bas indice et/ou la quatrième couche à bas indice sont par exemple à base d'oxyde de silicium, d'oxynitrure et/ou oxycarbure de silicium ou d'un oxyde mixte de silicium et d'aluminium.

Le revêtement antireflet est déposé par tout procédé connu tel que par une technique sous vide, notamment par pulvérisation cathodique assistée par champ magnétique ou par décharge couronne, ou les techniques impliquant un traitement thermique ou celles se faisant à froid, notamment la technique sol-gel, les techniques de pyrolyse en phase pulvérulente, solide ou gazeuse, cette dernière étant également désignée sous te terme de CVD (Chemical Vapor Deposition). La CVD peut être assistée par plasma.

A titre d'exemples, le revêtement antireflet peut être :
- le produit commercialisé par la société SAINT-GOBAIN GLASS FRANCE sous la dénomination VISION-LITE, empilement de quatre couches minces SiO₂/SiNₓ/SiO₂/SiNₓ déposées par magnétron,
- un produit sol-gel formé d'un empilement de couches à haut et bas indices à base de SiO₂ et TiO₂.

Les exemples qui suivent illustrent les avantages de la présente invention, sans toutefois en limiter la portée. Bien que l'épaisseur du verre n'influe pas sur les propriétés obtenues par la structure verrière de l'invention, dans chacun des exemples, l'épaisseur de chacune des feuilles de verre du vitrage présente la même ou approximativement la même épaisseur de l'ordre de 4 mm.

### Exemple 1 :

Selon cet exemple, un premier vitrage feuilleté tel que décrit précédemment est obtenu selon les techniques classiques de fabrication d'un tel vitrage. Les feuilles de verre utilisées pour chaque face sont des substrats verrier Vision Lite® commercialisés par la société Saint-Gobain Glass France. L'intercalaire entre les deux feuilles de verre est constitué de PVB et comprend un élément décoratif constitué d'un maillage lâche de fibres de PET (colorés ou non) entremêlées de diamètre 100 microns, l'espacement moyen entre les fibres entremêlées formant les mailles étant inférieur à 0,5 mm. L'élément décoratif est inséré au niveau de l'intercalaire uniquement dans la partie centrale du vitrage. Le coefficient de réflexion lumineuse mesuré selon la norme EN 410 du matériau constituant les fibres selon cet exemple est d'environ 50%.

### Exemple 2 :

Selon cet exemple, on fabrique de la même façon que pour l'exemple 1 un second vitrage feuilleté avec un élément décoratif identique mais le vitrage antireflet utilisé est cette fois un vitrage à propriété antireflet commercialisé par la société Berlinerglas sous la référence Tegla Classic ®.

### Exemple 3 :

Selon cet exemple, on fabrique de la même façon que pour l'exemple 1 un troisième vitrage mais on utilise cette fois un élément décoratif constitué d'un même maillage lâche de fibres de PET entremêlées mais dont la coloration des fibres est plus foncée, le coefficient de réflexion lumineuse mesuré selon la norme EN 410 du matériau constituant les fibres selon cet exemple étant cette fois d'environ 30%.

### Exemple 4 :

Selon cet exemple, on fabrique un quatrième vitrage avec un élément décoratif identique à celui de l'exemple 3 mais le vitrage antireflet utilisé est cette fois un vitrage à propriété antireflet dont les caractéristiques sont les suivantes : le verre est du Diamant® commercialisé par la société Saint-Gobain Glass France ; l'antireflet correspond à l'empilement suivant de couches en partant du verre, un oxyde mixte de zinc et d'étain (indice de 2,05 avec épaisseur de 20nm) /SiO₂ (indice de 1,46 avec épaisseur de 30 nm) / un oxyde mixte de zinc et d'étain (indice de 2,05 avec épaisseur de 77 nm) / SiO₂ (indice de 1,46 avec épaisseur de 91 nm), tel que décrit dans la demande WO 2004/005210.

Les qualités des vitrages à élément décoratif selon les exemples 1 à 4 pour une application relative à une cloison de verre sont évaluées de la même façon, en positionnant chacun des vitrages dans la pièce de la même manière, dans des conditions identiques d'éclairage et considérant les mêmes zones de mesure. Chaque vitrage est agencé pour séparer deux espaces d'une même pièce. L'évaluation est faite de la façon suivante :

On dispose au-dessus et en avant du vitrage un éclairage artificiel classique générant une luminance de l'ordre de 10 000 Cd/m² de telle façon que l'éclairage de la surface du vitrage soit de l'ordre de 1000 lux. Il n'y a aucun éclairage direct en direction du vitrage.

Les luminances (en candelas/m²) sous un tel éclairement sont directement mesurées sur chaque vitrage à l'aide d'un luminancemètre LS 100 fabriqué par la société Minolta.

Les mesures sont effectuées sur au moins deux zones distinctes du vitrage :
- dans une partie du vitrage comprenant les fibres constituant l'élément de décoration , ici en regard d'un élément 50 (figure 2); on note L_{M} la valeur de la luminance du vitrage doté de l'antireflet et face à l'élément décoratif,
- dans une partie du vitrage ne comprenant pas les fibres constituant l'élément de décoration, tel qu'en regard de la zone 16 de la figure 2 ; on note L_{V} la valeur de la luminance du vitrage doté de son antireflet, dans une zone en dehors de l'élément décoratif.

La mesure de la luminance par le luminancemètre est réalisée sur une surface de superficie similaire pour chacune des zones respectivement en regard et en dehors d'un élément de décoration.

Les résultats des mesures pour chacun des exemples sont regroupés dans le tableau 1 qui suit. En outre, est indiqué en dernière colonne du tableau, le résultat d'un test d'appréciation quant à la détection ou non de la masse verrière du vitrage par un observateur qui se trouve face au vitrage, par exemple à 3m, et regardant de l'autre côté du vitrage. Pour chacun des vitrages, l'observateur se situe au même emplacement et visualise le même point de l'autre côté du vitrage.

| Exemple | Nom commercial du vitrage antireflet | Rapport L_{M}/L_{V} | Réflexion de l'élément décoratif (%) | Détection de la masse verrière |
|---|---|---|---|---|
| 1 | Vision Lite® | 166 | 50 | non |
| 2 | Tegla Classic® | 41 | 50 | oui |
| 3 | Vision Lite® | 90 | 30 | oui |
| 4 | - | 390 | 30 | non |

L'analyse des données reportées dans le tableau 1 montre que la masse verrière paraît comme invisible lorsque le rapport des luminances entre la partie du vitrage comprenant le motif et la partie du vitrage qui est située en dehors du motif est supérieur à 99. En outre, ce rapport est en particulier obtenu pour un motif dont le coefficient de réflexion est supérieur à 30%.

Au final, par le choix ajusté du revêtement antireflet en fonction de la nature du matériau utilisé pour réaliser le motif de décoration, il est possible selon l'invention d'obtenir une structure pouvant servir de cloison transparente, permettant notamment la vision au travers de celle-ci sans gêne excessive, tout en y intégrant une fonction esthétique montrant le motif en quelque sorte flottant dans l'espace. Le choix approprié de la couche antireflet par application des critères selon l'invention permet ainsi de visualiser des motifs de décoration de la cloison, tout en conservant une bonne vision au travers de celle-ci, même pour un observateur placé à distance.

## Revendications

1. Structure verrière comportant au moins deux substrats verriers (10, 11) dotés de faces externes (12, 13) en regard de l'environnement extérieur de la structure et de faces opposées internes (14, 15) en regard l'une de l'autre, et au moins un élément décoratif (50) disposé entre les faces internes des deux substrats verriers, les faces externes (12, 13) des substrats étant toutes deux pourvues d'un revêtement antireflet, **caractérisée en ce que** l'élément décoratif (50) par son matériau constitutif présente un coefficient de réflexion lumineuse supérieur à 30%.

2. Structure verrière selon la revendication 1, **caractérisée en ce que** le revêtement antireflet est un empilement de couches minces.

3. Structure verrière selon la revendication 1 ou 2, **caractérisée en ce que** le substrat verrier pourvu du revêtement antireflet présente un coefficient de réflexion inférieur ou égal à 2 %, voire inférieur à 1%, de préférence de l'ordre de 0,5%.

4. Structure verrière selon l'une quelconque des revendications précédentes, **caractérisée en ce que** la structure présente une luminance L_{M} en regard d'une zone associée à l'élément décoratif et une luminance L_{V} en regard d'une zone exempte de l'élément décoratif, le rapport des luminances L_{M}/L_{V} étant supérieur à 99 sous un éclairage lumineux d'environ 1000 Lux.

5. Structure verrière selon l'une quelconque des revendications précédentes, **caractérisée en ce que** l'élément décoratif (50) est formé à partir d'une feuille en matière plastique décoré, tel qu'un voile de non tissé du type en polyéthylène téréphtalate (PET) ou en fibres de verre.

6. Structure verrière selon l'une quelconque des revendications précédentes, **caractérisée en ce que** le revêtement antireflet est un empilement de couches minces comportant une première couche, à haut indice, d'indice de réfraction n1 compris entre 1,8 et 2,2 et d'une épaisseur géométrique e1 comprise entre 5 et 50 nm, une seconde couche à bas indice, d'indice de réfraction n2 compris entre 1,35 et 1,65 et d'épaisseur géométrique e2 comprise entre 5 et 50 nm, une troisième couche à haut indice, d'indice de réfraction n3 compris entre 1,8 et 2,2 et d'épaisseur géométrique e3 comprise entre 70 et 120 nm, et une quatrième couche à bas indice, d'indice de réfraction n4 compris entre 1,35 et 1,65 et d'épaisseur géométrique e4 d'au moins 80 nm.

7. Structure verrière selon l'une quelconque des revendications précédentes, **caractérisée en ce que** le revêtement antireflet est un empilement de couches minces à base d'oxyde(s) métallique(s) choisi(s) parmi l'oxyde de zinc, l'oxyde d'étain, un oxyde mixte de zinc et d'étain, l'oxyde de zirconium ou à base de nitrure(s) choisi(s) parmi le nitrure de silicium et/ou le nitrure d'aluminium, un oxyde mixte de titane et zirconium.

8. Structure verrière selon l'une quelconque des revendications précédentes, **caractérisée en ce que** le revêtement antireflet comprend au moins une couche de silice poreuse déposée notamment par les techniques sol-gel.

9. Utilisation d'une structure verrière selon l'une quelconque des revendications précédentes, **caractérisée en ce que** la structure verrière est intégrée à une cloison intérieure de bâtiment ou de moyens de transport.
